(19) Europäisches Patentamt
European Patent Office
Office européen des brevets

(11) **EP 3 893 173 B1**

(12) **FASCICULE DE BREVET EUROPEEN**

(45) Date de publication et mention
de la délivrance du brevet:
**06.05.2026 Bulletin 2026/19**

(21) Numéro de dépôt: **21161663.6**

(22) Date de dépôt: **10.03.2021**

(51) Classification Internationale des Brevets (IPC):
**G06Q 10/0635** (2023.01)   **G01C 23/00** (2006.01)
**B64D 45/00** (2006.01)

(52) Classification Coopérative des Brevets (CPC):
**G06Q 10/0635; B64D 45/00; G01C 23/00;**
B64D 2045/0085

(54) **PROCÉDÉ ET DISPOSITIF DE GESTION DE RISQUES ET D'ALERTES**

VERFAHREN UND VORRICHTUNG ZUM GEFAHREN- UND ALARMMANAGEMENT

METHOD AND DEVICE FOR MANAGING RISKS AND ALERTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.04.2020 FR 2003444**

(43) Date de publication de la demande:
**13.10.2021 Bulletin 2021/41**

(73) Titulaire: **Airbus Helicopters
13725 Marignane Cedex (FR)**

(72) Inventeurs:
• **QUINTANA, Jean-Louis
31560 NAILLOUX (FR)**
• **ROUAT, Hervé
13800 ISTRES (FR)**
• **QUIOT, Jean-Marc
13300 SALON DE PROVENCE (FR)**
• **GRELLIER, Marc
13700 MARIGNANE (FR)**

(74) Mandataire: **GPI Brevets
1330, rue Guillibert de la Lauzière
EuroParc de Pichaury
Bât B2
13856 Aix en Provence Cedex 3 (FR)**

(56) Documents cités:
EP-A1- 2 647 959    FR-A1- 2 954 842
FR-A1- 3 037 155    US-A1- 2010 161 157

• CHAD GOERZEN ET AL: "Minimal risk motion
planning: a new planner for autonomous UAVs in
uncertain environments", AHS INTERNATIONAL
SPECIALISTS? MEETING ON UNMANNED
ROTORCRAFT, TEMPE, AZ, 27 January 2011
(2011-01-27), pages 1 - 21, XP055736920,
Retrieved from the Internet <URL:https://nams.
usra.edu/sites/nams/assets/AFDD/
AHS2011_Goerzen.pdf> [retrieved on 20201006]
• VIEBAHN VON H: "METHOD FOR DETECTING
AND AVOIDING FLIGHT HAZARDS",
PROCEEDINGS OF SPIE, IEEE, US, vol. 3088, 1
January 1997 (1997-01-01), pages 50 - 56,
XP000934268, ISBN: 978-1-62841-730-2, DOI:
10.1117/12.277244

**EP 3 893 173 B1**

**Description**

La présente invention est du domaine de la surveillance d'un système et en particulier d'un véhicule.

La présente invention concerne un procédé et un dispositif de gestion de risques et d'alertes pour un système tel un véhicule, notamment un aéronef, ainsi qu'un aéronef équipé d'un tel dispositif de gestion et d'alerte.

Un système, qu'il soit mécanique, thermique ou qu'il mette en œuvre tout type de technologies, peut être soumis à des disfonctionnements ou à des défauts pouvant dégrader, voire empêcher, son fonctionnement. Ces défauts ou ces dysfonctionnements peuvent impacter un composant du système. Il peut s'agir par exemple d'une panne ou d'une usure importante d'un composant, voire d'une rupture de ce composant. Ces défauts ou ces dysfonctionnements peuvent aussi se trouver sur un sous-système de ce système.

Dès lors, il est intéressant de pouvoir détecter de tels disfonctionnements ou défauts et en particulier d'anticiper leurs apparitions ainsi que leurs conséquences.

Des dispositifs et des procédés de surveillance d'un système ont été mis en place dans différents domaines technologiques tels que pour les centrales thermiques et nucléaires ainsi que pour les véhicules notamment.

En effet, une détection anticipée de l'apparition d'un défaut ou une détection d'un premier signe de la présence d'un défaut permet de limiter l'effet de ce défaut sur le système en arrêtant par exemple le système rapidement et en effectuant une opération de maintenance appropriée. De la sorte, les coûts de maintenance consécutifs à ce défaut sont limités de même que le temps d'immobilisation du système.

En outre, lorsque le système est par exemple un véhicule et en particulier un aéronef, certains défauts peuvent avoir des effets sur la sûreté et/ou la sécurité du système, notamment sur le vol de l'aéronef. Il est donc intéressant de pourvoir détecter au plus tôt ou bien d'anticiper l'apparition de défauts et les risques associés afin d'une part d'optimiser les coûts de maintenance du système et d'autre part d'améliorer la sûreté et/ou la sécurité du système.

Par exemple, le document EP 2873038 décrit un procédé de génération de données de probabilité utilisé pour évaluer les performances d'un système et d'une mission impliquant le système. Le procédé met en œuvre d'une part un modèle de diagnostic du système définissant les symptômes et les défaillances du système, et d'autre part un modèle d'impact de la mission définissant les effets du système sur la capacité à accomplir la mission. Le procédé combine des données issues du modèle de diagnostic du système et du modèle d'impact de la mission pour former un modèle combiné. Enfin, le procédé présente une réception des données d'observation de l'état du système en combinaison avec le modèle combiné pour générer des données de probabilité à utiliser pour évaluer les performances du système et de la mission.

Le procédé peut alors calculer une probabilité préalable de chacun des défauts potentiels au début d'une mission et une probabilité a priori d'un défaut depuis le début de la mission jusqu'à une phase que le modèle combiné indique comme pouvant être affectée par le défaut. Le procédé peut aussi calculer une probabilité a posteriori de l'échec de la mission ou d'une défaillance touchant un composant du système.

De plus, d'autres paramètres extérieurs au système peuvent également influer sur le fonctionnement du système et constituer de la sorte un risque pour ce fonctionnement du système. Par exemple, les conditions extérieures peuvent avoir un effet sur le rendement d'un système thermique, tel qu'un moteur à explosion équipant un véhicule. Le terrain dans lequel évolue le véhicule influe également sur ce fonctionnement, modifiant par exemple le besoin de puissance pour permettre un fonctionnement sûr du véhicule et d'un aéronef en particulier.

Dans le domaine aéronautique, on connait par exemple un procédé de surveillance des données de vol d'un aéronef, et d'un hélicoptère en particulier, désigné par l'acronyme *HFDM* pour la désignation en langue anglaise « Helicopter Flight Data Monitoring ». Ce procédé analyse plusieurs types de données enregistrées pendant le vol, à savoir des données de vol telles que l'altitude, la vitesse par rapport au sol et la vitesse verticale de l'aéronef, des paramètres liés au fonctionnement du ou des moteurs de l'aéronef ainsi que des données externes sur l'environnement telles que des données météorologiques et la présence d'une couverture nuageuse par exemple.

Ce procédé de surveillance permet ainsi de déterminer les niveaux de risques liés à un hélicoptère, mais uniquement après les vols de cet hélicoptère en détectant automatiquement les situations qui auraient pu être plus sûres ou risquaient d'entraîner un incident ou un accident.

En outre, le document EP 0964381 décrit un procédé et un dispositif de hiérarchisation des risques que peut subir un aéronef. Ce dispositif reçoit des informations de risques de différentes natures, par exemple des risques météorologiques, des risques liés au trafic aérien ou encore au terrain. A chaque risque, au moins deux critères sont associés, notamment le délai de mise en danger de l'aéronef vis-à-vis de ce risque et une gravité associée à ce risque. La gravité d'un risque est déterminée à partir d'une base de données d'incidents passés relatifs à ce type de risque. Ces critères sont combinés indépendamment pour chaque risque, donc sans combinaison entre eux, afin de déterminer une valeur de menace associée à ce risque. Ensuite, cette valeur de menace est comparée à un seuil et l'équipage de l'aéronef peut être alerté de ce risque si le seuil est dépassé. Cependant, si des valeurs de menace associées à plusieurs risques dépassent simultanément le seuil, une priorisation est effectuée et uniquement le risque dont la valeur de menace est la plus élevée est signalé à l'équipage de l'aéronef.

Cependant, ces différents procédés ou dispositifs ont tendance à traiter indépendamment les risques issus de différentes origines, sans traitement global des risques potentiels identifiés. Les différentes origines possibles des risques sont par exemple les dysfonctionnements et les défauts intrinsèques au système, les risques liés aux conditions extérieures, à l'environnement du système notamment ainsi qu'éventuellement à l'état de fatigue ou de stress d'un opérateur ou d'un pilote dans le cas d'un véhicule.

En effet, l'état d'un opérateur, ou d'un pilote dans le cas d'un véhicule, peut également influencer le fonctionnement et le rendement d'un système. L'état d'un opérateur ou d'un pilote peut comporter son état physique, par exemple son état de fatigue, ainsi qu'éventuellement son état physiologique, par exemple son état de stress ou encore son état psychologique. De fait, l'état d'un opérateur ou d'un pilote peut, par sa faculté et sa rapidité de réaction ou encore par ses décisions et ses initiatives, modifier le bon fonctionnement du système ainsi que son efficacité. L'état d'un pilote peut par exemple influencer grandement le comportement d'un véhicule, en particulier en termes de sécurité.

De plus, dans le cas où le système est un véhicule, et un aéronef en particulier, l'avancement et le déroulement d'un parcours et/ou d'une mission réalisée par le véhicule peut aussi avoir un effet sur le risque de défaillance ou de dysfonctionnement du véhicule, dû par exemple à la complexité de la mission, à sa durée, à son environnement ou encore à l'échec d'une phase de cette mission ou bien à des changements qui peuvent intervenir au cours de la mission. L'avancement et le déroulement d'un parcours et/ou d'une mission peut également avoir un effet direct ou indirect sur l'état du pilote du véhicule, par exemple sur sa fatigue ou son état de stress.

L'art antérieur comporte également le document US 2010/0161157 décrivant un dispositif de gestion d'alertes et de tâches d'un aéronef. Ce dispositif comporte un module d'alertes pour générer des alertes en fonction de risques de panne ou de dysfonctionnement de l'aéronef, un module de gestion des tâches pour générer une tâche en fonction des alertes et plusieurs modules d'affichage. Les alertes concernent des paramètres liés à l'aéronef, par exemple la détection d'un feu, la gestion d'un réseau électrique ou hydraulique, la gestion de commandes de vol, le conditionnement de l'air de la cabine...

En outre, le document EP 2647959 décrit un procédé d'adaptation d'une interface Homme-Machine en fonction de l'état physique et physiologique d'un pilote caractérisé par un niveau fonctionnel du pilote. Ce niveau fonctionnel du pilote est déterminé à partir de caractéristiques du pilote, des tâches à réaliser et de l'état de l'aéronef.

Le document FR 2954842 décrit quant à lui un système de gestion de tâches pour le pilotage d'un aéronef. Ce système comporte un moyen de détection d'alerte relatif au système de vol et recevant le statut du système de vol ainsi qu'un moyen de gestion des alertes affichant les alertes et les tâches à effectuer suite à ces alertes.

Le document FR 3037155 décrit un procédé de gestion de pannes pour un système de gestion moteur d'un aéronef. Chaque panne peut être classifiée selon deux niveaux de pannes.

On connait aussi la publication de C. Goerzen et M. Whalley, « Minimal Risk Motion Planning : a New Planner for Autonomous UAVs in Uncertain Environments », 27 janvier 2011, décrivant un planificateur de vol pour drones prenant en compte une gestion des risques optimisés en combinant notamment plusieurs caractéristiques de performance de l'aéronef afin de minimiser ces risques. Un niveau de risque du vol est calculé en combinant des facteurs de risques associés respectivement aux risques identifiés.

Enfin, la publication de H. Von Viebahn, « A Method for Detecting and Avoiding Flight Hazards », janvier 1997, décrit une méthode pour détecter des obstacles et éviter des collisions lors de vols d'un aéronef en prenant en compte indépendamment les risques potentiels liés à la météorologie, à la détection d'obstacles fixes ou mobiles.

Dès lors, l'art antérieur propose des solutions identifiant les risques potentiels ou réels, sans anticipation des situations à risques, sans proposer de solutions alternatives pour sortir de la situation à risque identifiée, ni de solutions pour traiter la cause d'une situation risquée identifiée et éviter ainsi d'être confronté avec une telle situation à risque.

La présente invention a alors pour but de proposer un procédé et un dispositif de gestion de risques et d'alertes permettant de s'affranchir des limitations mentionnées ci-dessus et visant à identifier les risques potentiels et réels relatifs à un système et à identifier leurs effets sur le système de sorte à anticiper une situation à risque et à limiter la probabilité d'être confronté avec une telle situation à risque.

La présente invention a par exemple pour objet un procédé de gestion de risques et d'alertes pour un système. Un tel système comporte notamment :

- plusieurs modules sources identifiant des risques avérés ou potentiels de pannes ou de dysfonctionnement du système,
- plusieurs modules auxiliaires identifiant des risques avérés ou potentiels liés à des paramètres extérieurs au système et susceptibles d'impacter le fonctionnement du système,
- un module central relié aux modules sources et aux modules auxiliaires, le module central comportant au moins un calculateur et recevant des informations relatives aux risques avérés ou potentiels de pannes ou de dysfonctionnement du système,

- au moins une interface d'action et d'information d'un opérateur du système, ladite au moins une interface d'action et d'information étant reliée au module central.

Le système est par exemple un système mécanique ou un système complexe. Un système mécanique ou un système complexe comporte différents éléments et dispositifs, par exemple des dispositifs de transmission de puissance mécanique, un ou plusieurs moteurs, tels que des moteurs thermiques et/ou des moteurs électriques, ou encore des dispositifs de contrôle et de surveillance du système. Un tel système est par exemple un véhicule, tel qu'un aéronef en particulier. Un véhicule peut également comporter un ou plusieurs dispositifs de localisation, tels que des récepteurs de localisation par satellites, des centrales inertielles, ainsi que des organes de pilotage afin de permettre des changements de direction du véhicule.

Le calculateur du module central peut comporter au moins un processeur et au moins une mémoire, au moins un circuit intégré, au moins un système programmable ou bien au moins un circuit logique, ces exemples ne limitant pas la portée donnée à l'expression « calculateur ». La mémoire peut par exemple stocker, une ou plusieurs bases de données ainsi qu'un ou plusieurs algorithmes afin de réaliser le procédé selon l'invention.

Le calculateur peut être un calculateur dédié à la réalisation du procédé selon l'invention ou être un calculateur partagé ayant de multiples fonctions. A ce titre, le calculateur peut être par exemple intégré au système. Ce calculateur peut par exemple être intégré à un dispositif avionique d'un aéronef lorsque le système mécanique est un aéronef.

Le procédé de gestion de risques et d'alertes pour un système selon l'invention est remarquable en ce qu'il comporte les étapes suivantes :

- détermination d'au moins un risque avéré ou potentiel de panne ou de dysfonctionnement du système par l'intermédiaire d'au moins un module source,
- détermination d'au moins un risque avéré ou potentiel lié à des paramètres extérieurs au système et susceptibles d'impacter le fonctionnement du système, par l'intermédiaire d'au moins un module auxiliaire,
- détermination d'un niveau de risque global en combinant les risques avérés ou potentiels et de leurs effets sur le système par l'intermédiaire du module central, et
- commande de ladite au moins une interface d'action et d'information en fonction du niveau de risque global.

L'étape de détermination d'au moins un risque avéré ou potentiel de panne ou de dysfonctionnement du système est réalisée par l'intermédiaire d'au moins un module source et permet d'identifier un ou plusieurs risques avérés ou potentiels susceptibles d'affecter le fonctionnement du système et de générer à court ou moyen terme au moins une panne ou un dysfonctionnement du système.

Afin de déterminer un tel risque avéré ou potentiel, chaque module source surveille un élément, un dispositif, un sous-système ou un paramètre du système et réalise par exemple une analyse des données courantes relatives à cet élément, ce dispositif, ce sous-système ou ce paramètre. Chaque module source peut dans ce but comporter un ou plusieurs capteurs ou un dispositif spécifique afin de surveiller un élément, un dispositif, un sous-système ou un paramètre du système.

Chaque module source peut également utiliser éventuellement des données passées préalablement mémorisées relatives à cet élément, ce dispositif, ce sous-système ou ce paramètre, et analyser simultanément les données courantes et les données passées. Les données courantes peuvent par exemple être comparées avec ces données passées afin de déterminer un écart ou une différence et en déduire un risque avéré ou potentiel.

Ces données passées peuvent être stockées dans une mémoire, par exemple sous la forme d'une base de données. Cette mémoire peut être reliée à un module source ou au module central ou bien être intégrée à un module source ou au module central.

L'étape de détermination d'au moins un risque avéré ou potentiel lié à un ou plusieurs paramètres extérieurs au système est réalisée par l'intermédiaire d'au moins un module auxiliaire et permet d'identifier un ou plusieurs risques avérés ou potentiels liés à un ou plusieurs paramètres extérieurs et susceptibles d'affecter le fonctionnement du système, voire d'empêcher à court ou moyen terme un fonctionnement normal du système et/ou de générer au moins une panne ou un dysfonctionnement du système.

Afin de déterminer un tel risque avéré ou potentiel, chaque module auxiliaire surveille au moins un paramètre extérieur au système et réalise par exemple une analyse de données courantes relatives à cet au moins un paramètre. Chaque module auxiliaire peut dans ce but comporter un ou plusieurs capteurs afin de surveiller au moins un paramètre extérieur au système.

Chaque module auxiliaire peut également utiliser éventuellement une prévision relative à cet au moins un paramètre extérieur au système, et analyser cette prévision afin de déterminer un risque avéré ou potentiel relatif à cet au moins un paramètre.

Une telle prévision peut être stockée dans une mémoire préalablement au démarrage du système. Cette mémoire peut être reliée à un module auxiliaire ou au module central ou bien être intégrée à un module auxiliaire ou au module central.

Un module auxiliaire peut également comporter un récepteur afin de recevoir une telle prévision relative à cet au moins un paramètre extérieur au système.

Chaque module auxiliaire peut également utiliser éventuellement des données passées relatives à ce paramètre, et analyser simultanément les données courantes, les prévisions et/ou les données passées. Les données courantes et/ou les prévisions peuvent par exemple être comparées avec ces données passées afin de déterminer un écart ou une différence et d'en déduire un risque avéré ou potentiel.

Ces données passées peuvent être stockées dans une mémoire, par exemple sous la forme d'une base de données. Cette mémoire peut être reliée à un module source ou au module central ou bien être intégrée à un module source ou au module central.

Ensuite, l'étape de détermination d'un niveau de risque global est réalisée par l'intermédiaire du module central en combinant les risques avérés ou potentiels précédemment établis relativement au système et aux paramètres extérieurs au système et leurs effets sur le système. En particulier, le calculateur du module central permet de déterminer ce niveau de risque global en utilisant les risques avérés ou potentiels relatifs au système et aux paramètres extérieurs au système et fournis respectivement par au moins un module source et au moins un module auxiliaire.

De plus, le module central peut éventuellement utiliser des données passées relatives au système et à son fonctionnement ainsi qu'aux effets de ces risques avérés ou potentiels. Le module central peut alors analyser simultanément les risques avérés ou potentiels relatifs au système et aux paramètres extérieurs au système ainsi que les données passées.

Ces données passées peuvent être stockées dans une mémoire, par exemple sous la forme d'une base de données. Cette mémoire peut être reliée au module central ou bien être intégrée au module central.

Le niveau de risque global peut par exemple être égal à une somme arithmétique ou une somme quadratique des risques avérés ou potentiels. Le niveau de risque global peut également être déterminé par une formule spécifique ou encore par un algorithme par exemple.

Enfin, l'étape de commande de ladite au moins une interface d'action et d'information est réalisée en fonction du niveau de risques combiné par l'intermédiaire du module central. Ladite au moins une interface d'action et d'information est pilotée par le module central.

L'étape de commande de ladite au moins une interface d'action et d'information peut ainsi permettre d'informer un opérateur du système du niveau de risque global, d'alerter cet opérateur si le niveau de risque global le nécessite, de proposer à cet opérateur une ou plusieurs actions sur le système en fonction de ce niveau de risque global, voire d'agir automatiquement sur le système si le niveau de risque global l'exige afin de préserver le système par exemple.

Par exemple, ladite au moins une interface d'action et d'information peut comporter un dispositif de visualisation et l'étape de commande de ladite au moins une interface d'action et d'information peut comporter une sous-étape d'affichage affichant sur le dispositif de visualisation le niveau de risque global et/ou une ou plusieurs informations relatives au système et/ou à son environnement.

Une information relative au système peut par exemple comporter une ou plusieurs actions à réaliser sur le système par l'opérateur en fonction du niveau de risque global.

Selon un autre exemple, ladite au moins une interface d'action et d'information peut comporter un dispositif d'alerte et l'étape de commande de ladite au moins une interface d'action et d'information peut comporter une sous-étape d'alerte alertant un opérateur du système en fonction du niveau de risque global. L'alerte peut être visuelle, vibratoire ou sonore par exemple.

Selon un autre exemple, ladite au moins une interface d'action et d'information peut comporter un dispositif de commande du système et l'étape de commande de l'interface d'action et d'information peut comporter une sous-étape d'action par l'intermédiaire du dispositif de commande. De la sorte, au moins une action sur le système peut être réalisée automatiquement par l'intermédiaire du dispositif de commande en fonction du niveau de risque global.

Selon un autre exemple, ladite au moins une interface d'action et d'information peut comporter un dispositif de visualisation, un dispositif de validation et un dispositif de commande du système. L'étape de commande de l'interface d'action et d'information peut comporter une sous-étape d'affichage affichant sur le dispositif de visualisation une ou plusieurs actions à réaliser, une sous-étape de validation par un opérateur du système et une sous-étape d'action par l'intermédiaire du dispositif de commande. De la sorte, l'opérateur peut valider au moins une action proposée par l'intermédiaire du dispositif de validation, voire toutes les actions proposées et chaque action validée peut être réalisée automatiquement par l'intermédiaire du dispositif de commande.

Le dispositif de validation peut être le dispositif de visualisation, par exemple un écran tactile, ou bien un bouton, un clavier ou tout dispositif approprié.

De la sorte, le procédé selon l'invention permet avantageusement de traiter de façon globale et conjointe les différents risques relatifs au système, à son environnement et à son fonctionnement. En conséquence, le niveau de risque global est déterminé en analysant les risques avérés ou potentiels relatifs au système et à son environnement de façon dépendante de sorte à diminuer le risque final relatif au système contrairement aux techniques de l'art antérieur cumulant les risques indépendamment les uns des autres.

Le procédé selon l'invention permet ainsi d'identifier les effets sur le système agissant simultanément et de façon dépendante de sorte à anticiper une situation à risque et à limiter la probabilité d'entrer dans une telle situation à risque.

De plus, le procédé selon l'invention permet également de rassurer l'opérateur du système grâce à la gestion globale des risques et, par suite, de diminuer son stress et de fait améliorer son efficacité.

Le procédé peut de plus comprendre une ou plusieurs des caractéristiques qui suivent.

Selon un aspect, l'étape de détermination d'un niveau de risque global peut être réalisée en utilisant une pondération associée à chaque risque avéré ou potentiel relatif au système ou à son environnement. Cette pondération permet avantageusement de hiérarchiser chaque élément, chaque dispositif, chaque sous-système et chaque paramètre du système ainsi que les paramètres extérieurs au système et d'appliquer des coefficients de pondération à chaque risque en fonction de cette hiérarchisation, en fonction de l'importance de chaque élément, chaque dispositif, chaque sous-système et chaque paramètre du système ainsi que des paramètres extérieurs au système et en fonction des effets d'un défaut sur chaque élément, chaque dispositif, ou chaque sous-système par exemple sur le fonctionnement du système.

Le niveau de risque global peut alors être égal par exemple à une somme arithmétique pondérée ou une somme quadratique pondérée des risques avérés ou potentiels. Le niveau de risque global peut également être déterminé par une formule spécifique ou encore par un algorithme par exemple faisant intervenir des coefficients de pondération.

Les coefficients de pondération associés à chaque risque peuvent être stockés dans une mémoire, par exemple sous la forme d'une base de données, reliée au module central ou bien être intégrée au module central.

Selon un aspect, l'étape de détermination d'un niveau de risque global peut être réalisée par l'intermédiaire d'un système expert, d'une intelligence artificielle ou bien d'un système neuronal.

Selon un aspect, l'étape de détermination d'au moins un risque avéré ou potentiel de panne ou de dysfonctionnement du système peut comporter les sous-étapes suivantes :

- mesure d'une caractéristique d'un élément du système, d'une caractéristique d'un dispositif du système, d'une caractéristique d'un sous-système du système ou d'au moins un paramètre du système,
- analyse de ladite au moins une caractéristique, et
- calcul d'au moins un risque avéré ou potentiel de panne ou de dysfonctionnement du système associé à ladite au moins une caractéristique.

Selon un aspect, l'étape de détermination d'au moins un risque avéré ou potentiel lié à au moins un paramètre extérieur au système peut comporter les sous-étapes suivantes :

- mesure d'au moins un paramètre extérieur au système,
- analyse dudit au moins un paramètre extérieur, et
- calcul d'au moins un risque avéré ou potentiel associé audit au moins un paramètre extérieur au système.

Selon un aspect, un ou plusieurs modules sources peuvent permettre de surveiller un élément ou un dispositif du système et de déterminer au moins un risque avéré ou potentiel relatif à cet élément ou à ce dispositif du système. Par exemple, un module permet de surveiller un dispositif de transmission de puissance mécanique ou un moteur du système et de déterminer au moins un risque avéré ou potentiel relatif à ce dispositif de transmission de puissance mécanique ou ce moteur. Un module source est par exemple un contrôleur de type *FADEC,* pour la désignation en langue anglaise « Full Authority Digital Engine Control », relié à au moins un moteur et permettant de réaliser un contrôle de la santé d'un moteur.

Un ou plusieurs modules sources peuvent aussi permettre de surveiller un sous-système du système comportant plusieurs éléments et/ou plusieurs dispositifs et de déterminer au moins un risque avéré ou potentiel relatif à ce sous-système. Par exemple, un module source permet de surveiller une installation motrice du système comportant au moins un dispositif de transmission de puissance mécanique et un ou plusieurs moteurs. Le module source permet alors de déterminer au moins un risque avéré ou potentiel relatif à cette installation motrice.

Par ailleurs, un risque avéré ou potentiel associé à un sous-système peut aussi être déterminé en combinant les risques associés aux éléments et dispositifs constituant ce sous-système. Dans ce cas, les modules sources déterminant les risques associés à ces éléments et à ces dispositifs constituant ce sous-système peuvent être reliés entre eux afin de déterminer un tel risque avéré ou potentiel associé au sous-système, indépendamment du module central.

Cependant, ces risques associés aux éléments et aux dispositifs constituant ce sous-système peuvent être combinés par le module central afin de déterminer le risque avéré ou potentiel associé au sous-système.

De plus, un ou plusieurs modules sources peuvent aussi permettre de surveiller des paramètres de fonctionnement du système lui-même et de déterminer au moins un risque avéré ou potentiel relatif à chacun de ces paramètres, par exemple lorsqu'un paramètre se rapproche d'une limite ou d'un seuil. Par exemple, un module permet de surveiller les paramètres de navigation d'un aéronef, tels que sa vitesse, son altitude et son attitude, et de déterminer au moins un risque avéré ou potentiel relatif à ces paramètres. Un module source est par exemple un dispositif de surveillance du système et/ou de ses performances.

Selon un aspect, un ou plusieurs modules auxiliaires permettent de surveiller un ou plusieurs paramètres de l'environnement du système pouvant affecter le fonctionnement du système et de déterminer au moins un risque avéré ou potentiel relatif à ce ou ces paramètres de l'environnement.

Un paramètre extérieur au système peut être les conditions atmosphériques. Un module auxiliaire peut comporter un ou plusieurs capteurs afin de mesurer par exemple, les conditions météorologiques et en particulier la température et la pression atmosphérique extérieures au système ou encore le vent subi par le système. Un module auxiliaire peut aussi être relié à une mémoire comportant des informations météorologiques telles que le dernier bulletin météorologique de la zone dans laquelle se trouve le système. Un module auxiliaire peut également comporter un récepteur afin de recevoir des informations météorologiques, en particulier le dernier bulletin météorologique de la zone dans laquelle se trouve le système.

Un paramètre extérieur au système peut par exemple être l'état d'un opérateur de ce système, un module auxiliaire surveillant l'état de cet opérateur, tant d'un point de vue de son état physique que de son état psychique et/ou psychologique et déterminant si cet état de l'opérateur est en adéquation avec la gestion ou le pilotage de ce système. Ce module auxiliaire peut comporter par exemple des capteurs mesurant des paramètres physiques de l'opérateur, tels que son rythme cardiaque, sa température, son acuité visuelle... Le module auxiliaire peut aussi avoir accès à un historique de cet opérateur stocké dans une mémoire, par exemple sous la forme d'une base de données. Cet historique comporte par exemple des informations sur l'expérience de l'opérateur, les tâches qu'il maîtrise ainsi que les formations qu'il a suivies.

Un paramètre extérieur au système peut aussi être les tâches à réaliser par le système, ainsi que leur déroulement et leur avancement. Par exemple, ces tâches peuvent être regroupées sous la forme d'une mission à réaliser lorsque le système est un véhicule et/ou d'un plan de vol lorsque le système est un aéronef en particulier. Ces tâches peuvent être stockées dans une mémoire. Le module auxiliaire peut alors analyser l'avancement de ces tâches et leur réalisation. Un tel module auxiliaire a alors accès à la mémoire contenant ces tâches. Un niveau de difficulté et/ou un niveau d'expérience requis peuvent être associés à chaque tâche.

Un paramètre extérieur au système peut également être, lorsque le système est un véhicule et un aéronef en particulier, le relief du terrain environnant le système ainsi que les obstacles susceptibles de se trouver sur ce terrain. Le module auxiliaire peut alors comporter des capteurs afin d'identifier en temps réel le relief et les obstacles. Le module auxiliaire peut également utiliser une base de données stockée dans la mémoire et contenant les informations relatives à ce terrain, son relief et ses obstacles.

Chaque mémoire peut être reliée à un module auxiliaire ou au module central ou bien être intégrée à un module auxiliaire ou au module central.

De la sorte, chaque module auxiliaire surveille au moins un paramètre extérieur au système, réalise une analyse de cet au moins un paramètre extérieur au système et en déduit un risque avéré ou potentiel relatif au fonctionnement du système.

Ensuite, la détermination d'un niveau de risque global en combinant les risques avérés ou potentiels précédemment établis relativement au système et aux paramètres extérieurs au système et de leurs effets sur le système est réalisée par l'intermédiaire du module central.

Selon un aspect, lorsque le système est un aéronef, les modules sources peuvent comporter :

- au moins un module de contrôle santé moteur *FADEC,*
- au moins un module de surveillance des organes de vol de l'aéronef, et/ou
- au moins un module de contrôle d'un dispositif avionique.

De plus, les modules auxiliaires peuvent alors comporter :

- au moins un module météo,
- au moins un module de contrôle des conditions de vol *IFR* et *VFR* pour les désignations en langue anglaise « Instrument Flight Rules » et « Visual Flight Rules »,
- au moins un module de surveillance du terrain,
- au moins un module de suivi de la mission, et/ou
- au moins un module de suivi de l'état d'un pilote.

La présente invention vise également un dispositif de gestion de risques et d'alertes pour un système. Ce dispositif de gestion de risques et d'alertes est configuré pour la mise en œuvre du procédé tel que précédemment décrit et comporte :

- plusieurs modules sources identifiant des risques avérés ou potentiels de pannes ou de dysfonctionnement du système,
- plusieurs modules auxiliaires identifiant des risques avérés ou potentiels liés à des paramètres extérieurs au système et susceptibles d'impacter le fonctionnement du système,
- un module central relié aux modules sources et aux modules auxiliaires, le module central comportant au moins un calculateur et recevant des informations relatives aux risques avérés ou potentiels de pannes ou de dysfonctionnement du système, et
- au moins une interface d'action et d'information du pilote reliée au module central.

La présente invention vise également un véhicule comportant un tel dispositif de gestion de risques et d'alertes.

La présente invention vise en particulier un aéronef équipé d'un tel dispositif de gestion de risques et d'alertes.

L'invention et ses avantages apparaîtront avec plus de détails dans le cadre de la description qui suit avec des exemples donnés à titre illustratif en référence aux figures annexées qui représentent :

- la figure 1, un système relié à un dispositif de gestion de risques et d'alertes,
- la figure 2, un aéronef muni d'un dispositif de gestion de risques et d'alertes,
- la figure 3, un schéma synoptique d'un procédé de gestion de risques et d'alertes d'un système,
- les figures 4 à 6, des courbes relatives à des paramètres liés au système, et
- la figure 7, un schéma synoptique d'un procédé de gestion de risques et d'alertes d'un système.

Les éléments présents dans plusieurs figures distinctes sont affectés d'une seule et même référence.

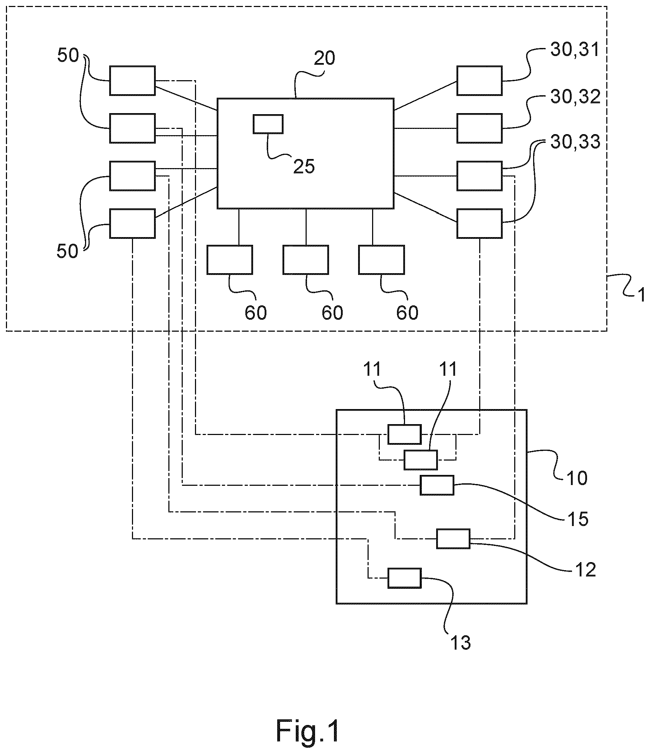

La figure 1 représente un dispositif de gestion de risques et d'alertes 1 relié à un système 10 par exemple un système mécanique ou un système complexe. Ce système 10 peut comporter différents éléments ou dispositifs 11-15 éventuellement regroupés afin de former un sous-système.

Le système 10 peut par exemple comporter un ou plusieurs moteurs 11 pouvant être thermiques ou électriques notamment. Le système 10 peut aussi comporter un dispositif de transmission de puissance mécanique 15 entraîné mécaniquement par un ou plusieurs moteurs 11. Le système 10 peut également comporter un organe de pilotage 13,14 du système 10. Le système 10 peut encore comporter un dispositif de contrôle et de surveillance 12 du système 10.

Le dispositif de gestion de risques et d'alertes 1 comporte plusieurs modules sources 50, plusieurs modules auxiliaires 60, un module central 20 et au moins une interface 30 d'action et d'information.

Chaque module source 50 permet d'identifier des risques avérés ou potentiels de pannes ou de dysfonctionnement du système 10. Chaque module source 50 peut par exemple être relié à un élément ou dispositif 11-15 du système 10 ou encore à un sous-système de ce système 10. De la sorte, chaque module source 50 permet de surveiller cet élément ou ce dispositif 11-15 du système 10 ou encore ce sous-système afin d'identifier des risques avérés ou potentiels de pannes ou de dysfonctionnement du système 10 relatifs à cet élément ou à ce dispositif 11-15 ou encore à ce sous-système.

Un ou plusieurs modules sources 50 peuvent permettre de surveiller un ou plusieurs paramètres du système 10 afin d'identifier des risques avérés ou potentiels de pannes ou de dysfonctionnement du système 10 par l'intermédiaire de ce ou ces paramètres du système 10.

Un module source 50 peut par exemple comporter un ou plusieurs capteurs ou un dispositif spécifique pour mesurer et surveiller des données courantes relatives à un paramètre du système 10, ou à un élément ou dispositif 11-15 du système 10 ou encore à un sous-système de ce système 10. Un module source 50 peut par exemple comporter un calculateur pour analyser les données courantes relatives à cet élément ou ce dispositif 11-15, ce sous-système ou ce paramètre.

Un module source 50 peut aussi comporter une mémoire ou être relié à une mémoire stockant des données passées relatives à un paramètre du système 10, ou à un élément ou dispositif 11-15 du système 10 ou encore à un sous-système de ce système 10.

Le module source 50 peut alors utiliser ces données passées afin d'identifier des risques avérés ou potentiels de pannes ou de dysfonctionnement du système 10, par exemple en comparant les données courantes et les données passées.

Chaque module auxiliaire 60 permet d'identifier des risques avérés ou potentiels liés à des paramètres extérieurs au système 10 et susceptibles d'impacter le fonctionnement du système 10. Un ou plusieurs modules auxiliaires 60 peuvent notamment permettre de surveiller un ou plusieurs paramètres de l'environnement du système 10 ainsi que des paramètres concernant l'état d'un opérateur du système 10.

Dans ce but, un module auxiliaire 60 peut comporter un ou plusieurs capteurs ou un dispositif spécifique pour mesurer et surveiller des données courantes relatives à des paramètres extérieurs au système 10. Un module auxiliaire 60 peut aussi comporter un calculateur pour analyser les données courantes relatives à chaque paramètre.

Un module auxiliaire 60 peut également comporter une mémoire ou être relié à une mémoire stockant des données passées relatives à un ou plusieurs paramètres extérieurs au système 10.

Le module auxiliaire 60 peut alors utiliser ces données passées afin d'identifier des risques avérés ou potentiels de pannes ou de dysfonctionnement du système 10, par exemple en comparant les données courantes et les données passées.

Par ailleurs, pour des paramètres extérieurs au système 10 particuliers, par exemple liés à la météorologie, tels que la température, la pression atmosphérique ou encore la présence de nuages ou de pluie, un module auxiliaire 60 peut utiliser des prévisions relatives à chacun de ces paramètres en remplacement ou en complément des données courantes.

Dans ce but, un module auxiliaire 60 peut comporter une mémoire ou être relié à une mémoire stockant de telles prévisions. Un module auxiliaire 60 peut aussi comporter un récepteur afin de recevoir une telle prévision relative à un ou plusieurs paramètres extérieurs au système 10.

Le module auxiliaire 60 peut alors identifier des risques avérés ou potentiels de pannes ou de dysfonctionnement du système 10 sur la base de chaque prévision, par exemple en analysant chaque prévision et en la comparant éventuellement avec les données courantes et/ou les données passées.

Le module central 20 est relié aux modules sources 50, aux modules auxiliaires 60 et à chaque interface d'actions et d'information. De la sorte, le module central 20 peut recevoir de chaque module source 50 et/ou de chaque module auxiliaire 60 une ou plusieurs informations de risques avérés ou potentiels de pannes ou de dysfonctionnement du système 10. Le module central 20 comporte notamment au moins un calculateur 25 afin d'analyser et de combiner ces informations relatives aux risques avérés ou potentiels de pannes ou de dysfonctionnement du système 10.

De plus, le module central 20 peut comporter au moins une mémoire stockant des données passées relatives au système 10 ainsi que sur son fonctionnement et les effets de ces risques avérés ou potentiels. Le module central 20 peut alors analyser simultanément les risques avérés ou potentiels relatifs au système 10 et aux paramètres extérieurs au système 10 ainsi que les données passées afin de déterminer le niveau de risque global.

Chaque interface 30 d'action et d'information du pilote est reliée au module central 20.

Une interface 30 d'action et d'information peut ainsi permettre d'informer un opérateur du système du niveau de risque global, d'alerter cet opérateur si le niveau de risque global le nécessite, de proposer à cet opérateur une ou plusieurs actions sur le système 10 en fonction de ce niveau de risque global, voire d'agir automatiquement sur le système 10 si le niveau de risque global l'exige afin de préserver le système 10 par exemple.

Une interface 30 d'action et d'information peut comporter un dispositif de visualisation 31, tel qu'un écran, permettant d'afficher le niveau de risque global ainsi qu'éventuellement une ou plusieurs informations relatives au système 10 et/ou à son environnement et une ou plusieurs actions à réaliser sur le système 10 par l'opérateur en fonction du niveau de risque global.

Une interface 30 d'action et d'information peut aussi comporter un dispositif d'alerte 32 afin d'alerter un opérateur du système 10 d'un risque possible sur le système 10 en fonction du niveau de risque global. Le dispositif d'alerte 32 peut être visuel, vibratoire ou sonore par exemple.

Une interface 30 d'action et d'information peut également comporter un dispositif de commande 33 du système 10. Un dispositif de commande 33 peut être relié à un ou plusieurs éléments ou dispositifs 11-15 du système 10. De la sorte, un dispositif de commande 33 peut piloter ou commander un élément ou dispositifs 11-15 du système 10 afin de réaliser par exemple automatiquement une ou plusieurs actions sur le système 10 et en

particulier sur cet ou ces éléments ou dispositifs 11-15 du système 10 en fonction du niveau de risque global.

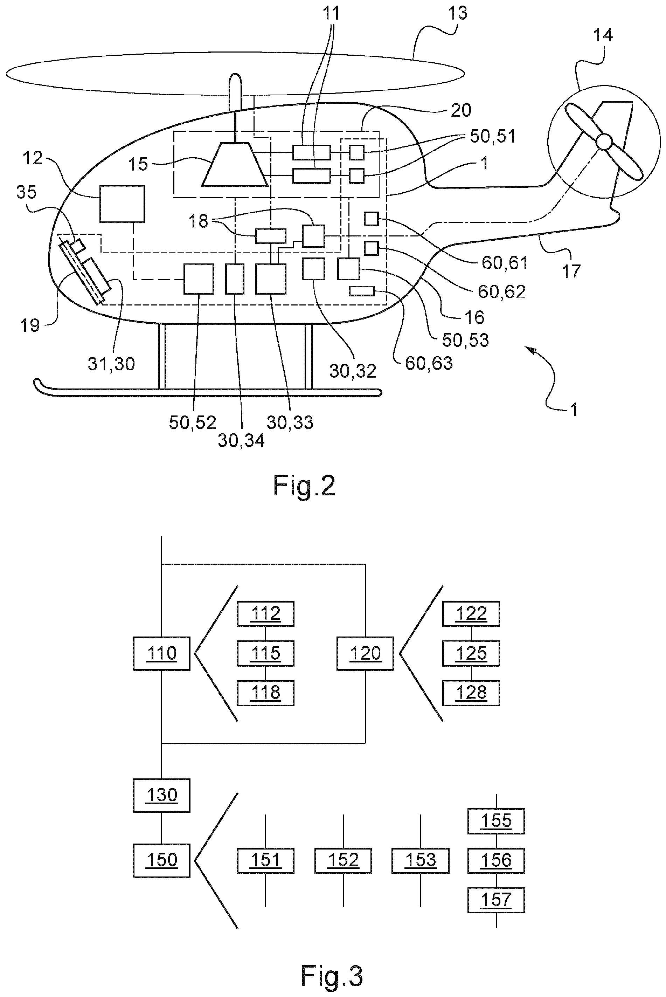

Un tel système 10 peut être par exemple un véhicule et en particulier un aéronef comme représenté sur la figure 2. Un tel système 10 comporte un fuselage 16 et une poutre de queue 17 ainsi qu'un organe de pilotage formé par un rotor de sustentation 13 agencé au dessus du fuselage 16 et un autre organe de pilotage formé par un rotor auxiliaire 14 agencé à l'extrémité arrière de la poutre de queue 17. Ce système 10 comporte aussi deux moteurs 11 entraînant une boîte de transmission mécanique de puissance 15 entraînant en rotation le rotor de sustentation 13 et le rotor auxiliaire 14. Ce système 10 comporte également un tableau de bord 19 et un dispositif de contrôle et de surveillance 12 formé par un dispositif avionique muni notamment de divers capteurs et d'instruments permettant de mesurer ou estimer des paramètres et d'indiquer les valeurs de ces paramètres. Ce système 10 comporte encore des servocommandes 18 permettant de piloter le rotor de sustentation 13 et le rotor auxiliaire 14 et en particulier de modifier les réglages des pas des pales de ces rotors 13,14. De la sorte, le rotor de sustentation 13 et le rotor auxiliaire 14 constituent des organes de pilotage de ce système 10 permettant d'une part la sustentation et la propulsion de l'aéronef et d'autre part des changements de direction.

Ce système 10 peut enfin comporter un dispositif de gestion de risques et d'alertes 1.

Le dispositif de gestion de risques et d'alertes 1 comporte des modules sources 50 et des modules auxiliaires 60. Par exemple, deux modules sources 50 sont des contrôleurs moteur 51 reliés respectivement à un moteur 11 afin d'une part de surveiller et piloter son fonctionnement et d'autre part de déterminer les risques avérés ou potentielles relatifs chaque moteur 11. Un contrôleur moteur 51 est par exemple un contrôleur de type *FADEC.*

Une installation motrice 20 comportant les deux moteurs 11, les deux contrôleurs moteur 51 et la boîte de transmission mécanique de puissance 15 constitue un sous-système de ce système 10. Un module source 50,53 peut être relié à cette installation motrice 20 afin de surveiller son fonctionnement et déterminer les risques avérés ou potentielles relatifs à cette installation motrice 20.

Un module source 50,52 peut être aussi être relié au dispositif avionique 12 afin de surveiller d'une part le dispositif avionique 12 et son fonctionnement, et d'autre part certains paramètres de fonctionnement du système 10, par exemple, l'altitude de l'aéronef, sa vitesse, sa position... De la sorte, module source 50,52 peut surveiller le fonctionnement du système 10 et déterminer les risques avérés ou potentielles relatifs à ces paramètres et/ou au dispositif avionique 12.

Un module auxiliaire 60,61 peut être dédié, comme décrit précédemment à la surveillance de paramètres extérieurs au système 10 relatifs à la météorologie.

Un module auxiliaire 60,62 peut être dédié à la surveillance du terrain environnant et un module auxiliaire 60,63 peut être dédié à la surveillance de l'état du pilote de l'aéronef.

Le dispositif de gestion de risques et d'alertes 1 comporte enfin plusieurs interface 30 d'action et d'information. Comme évoqué précédemment, une interface 30 peut comporter par exemple un dispositif de visualisation 31, tel qu'un écran, agencé sur le tableau de bord 19 et/ou un dispositif d'alerte 32.

Une interface 30 peut aussi comporter un ou plusieurs dispositifs de commande 33,34 relié par exemple respectivement aux rotors 13,14 et à l'installation motrice 20. De la sorte, le dispositif de commande 33 peut commander les servocommandes 18 afin de piloter le rotor de sustentation 13 et le rotor auxiliaire 14 et le dispositif de commande 34 peut agir sur l'installation motrice 20 et en particulier sur les moteurs 11.

Un dispositif de gestion de risques et d'alertes 1 est configuré pour mettre en œuvre un procédé de gestion de risques et d'alertes dont un schéma synoptique est représenté sur la figure 3. Ce procédé comporte plusieurs étapes.

Tout d'abord, une étape de détermination 110 d'au moins un risque avéré ou potentiel de panne ou de dysfonctionnement du système 10 est réalisée par l'intermédiaire d'au moins un module source 50.

Cette étape de détermination 110 peut permettre notamment de déterminer un risque avéré ou potentiel relatif à un moteur 11 de l'aéronef en réalisant par exemple un contrôle de santé avant un vol ou pendant un vol par l'intermédiaire des contrôleurs moteur 51 et en identifiant une perte de puissance de ce moteur 11 ou bien un vieillissement important de ce moteur 11.

Cette étape de détermination 110 peut aussi permettre de déterminer un risque avéré ou potentiel relatif à des paramètres de fonctionnement de l'aéronef par l'intermédiaire du module source 50,52 relié au dispositif avionique 12.

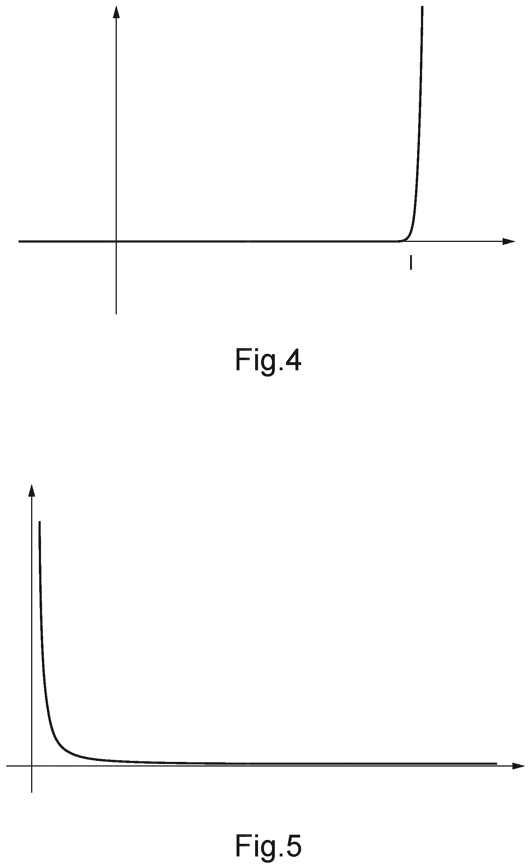

Une courbe relative à un risque associé à un paramètre de l'aéronef est représentée sur la figure 4. Cette courbe représente par exemple le risque associé à la variation de la vitesse par rapport à l'air ou bien à la variation de l'altitude de l'aéronef. En effet, pour ces deux paramètres, une valeur maximale ne doit pas être dépassée sans risque pour l'aéronef à savoir une survitesse ou une altitude maximale. Dès lors, le risque associé à chacun de ces paramètres peut être exprimé par la formule suivante : $R = exp(x - l)$, avec

- x, la valeur courante du paramètre,
- *l*, la valeur maximale de ce paramètre, et
- *exp,* la fonction mathématique exponentielle.

Une courbe relative à un risque associé à un autre paramètre de l'aéronef est représentée sur la figure 5. Cette courbe représente par exemple le risque associé à la variation de la hauteur de l'aéronef par rapport au sol. En effet, pour ce paramètre, une valeur minimale égale à zéro ou supérieure à zéro en prenant une marge de sécurité ne doit pas être dépassée, afin d'éviter un contact avec le sol, hormis en cas d'atterrissage bien entendu. Dès lors, le risque associé à ce paramètre de hauteur par rapport au sol peut être exprimé par la formule suivante : $R = exp\left(1/x\right) - 1$, avec

- *x*, la valeur courante de la hauteur par rapport au sol et
- *exp,* la fonction mathématique exponentielle.

L'étape de détermination 110 peut comporter des sous-étapes, comme représentée sur la figure 3. Ainsi, une sous-étape de mesure 112 est réalisée afin de mesurer au moins une caractéristique d'un élément ou d'un dispositif 11-15 du système 10, au moins une caractéristique d'un sous-système 20 du système 10 ou au moins un paramètre du système 10, suivie d'une sous-étape d'analyse 115 de cette au moins une caractéristique. Enfin une sous-étape de calcul 118 est réalisée, par exemple par un calculateur du module source 50 afin de calculer au moins un risque avéré ou potentiel de panne ou de dysfonctionnement du système 10 associé à cette au moins une caractéristique.

Ensuite, une étape de détermination 120 d'au moins un risque avéré ou potentiel lié à des paramètres extérieurs au système 10 et susceptibles d'impacter le fonctionnement du système 10 est réalisée par l'intermédiaire d'au moins un module auxiliaire 60.

L'étape de détermination 120 peut comporter des sous-étapes, comme représentée sur la figure 3. Une sous-étape de mesure 122 est ainsi réalisée afin de mesurer au moins un paramètre extérieur au système 10, suivie d'une sous-étape d'analyse 125 de cet au moins un paramètre extérieur. Puis, une sous-étape de calcul 128 est réalisée, par exemple par un calculateur du module auxiliaire 60 afin de calculer au moins un risque avéré ou potentiel associé à cet au moins un paramètre extérieur au système 10.

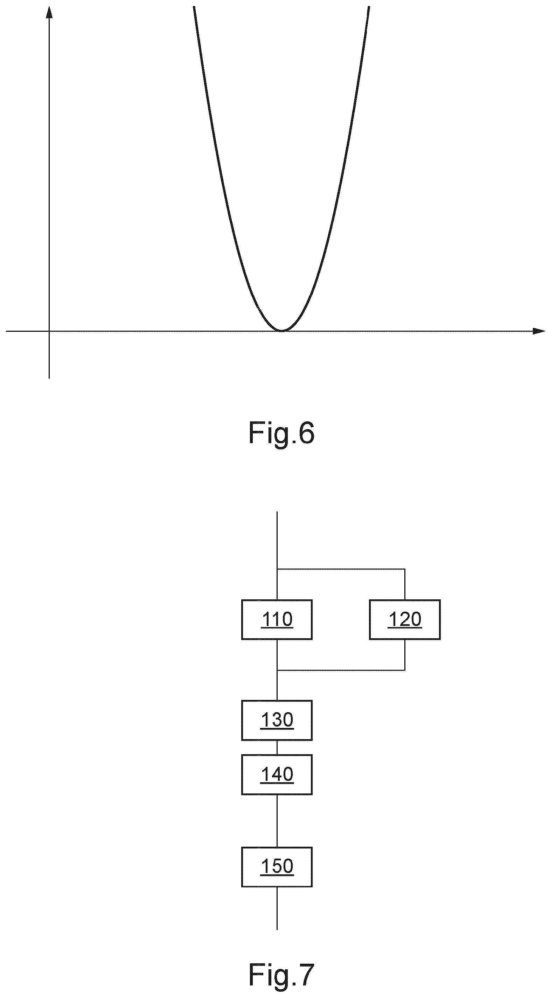

Une courbe relative à un risque associé à un paramètre à l'aéronef peut par exemple être représentée sur la figure 6. Cette courbe représente par exemple le risque associé à la luminosité permettant ou non la réalisation d'un vol en conditions *VFR,* à savoir à vue par le pilote. En effet, le risque associé à la réalisation d'un vol en conditions *VFR* est lié à la luminosité et à la visibilité que peut avoir un pilote. En faisant abstraction des conditions météorologiques, le risque relatif au manque de luminosité est par exemple nul lorsque le soleil est au zénith et maximal durant la nuit et peut suivre une fonction parabolique du temps comme représentée sur la figure 6. Dès lors, le risque associé à ce paramètre peut être exprimé par la formule suivante :

$$R = a.t^2 + b.t + c,$$

avec

- $t$, la valeur courante de l'heure,
- « . », la fonction mathématique multiplication,
- « + », la fonction mathématique addition, et
- $a$, $b$, $c$, des coefficients variables en fonction des heures de lever et de coucher du soleil.

Les étapes de détermination 110,120 sont de préférence réalisées en parallèle et simultanément afin notamment d'optimiser la durée de réalisation du procédé selon l'invention. Cependant, les étapes de détermination 110,120 peuvent être réalisées de façon séquentielle.

Puis, une étape de détermination 130 d'un niveau de risque global en combinant les risques avérés ou potentiels et de leurs effets sur le système 10 est réalisée par l'intermédiaire du module central 20.

Le niveau de risque global peut par exemple être égal à une somme arithmétique ou une somme quadratique des risques avérés ou potentiels. Le niveau de risque global peut également être déterminé par une formule spécifique ou encore par un algorithme par exemple.

Le module central 20 peut utiliser un système expert, une intelligence artificielle ou bien un système neuronal pour déterminer le niveau de risque global.

En outre, l'étape de détermination 130 d'un niveau de risque global peut prendre en compte des coefficients de pondération associés à chaque risque avéré ou potentiel relatif au système 10 ou à son environnement. Chaque coefficient de pondération peut correspondre par exemple à un niveau de criticité associé à chaque élément ou dispositif 11-15 du système 10, à chaque sous-système et chaque paramètre du système 10 ainsi qu'à chaque paramètre extérieur au système 10 qui sont surveillés par les modules sources 50 et les modules auxiliaires 60. Le niveau de risque global peut par exemple être égal par exemple à une somme arithmétique pondérée selon la formule suivante :

$$R_C = \sum_{i=1}^{n}(Cp_i.R_i) \text{, avec}$$

- $\Sigma$, la fonction mathématique somme,
- $i$, le rang dans la somme,
- $n$, le nombre total de risques avéré ou potentiel à prendre en compte,
- « . », la fonction mathématique multiplication,
- $R_i$, le risque avéré ou potentiel de rang i, et
- $Cp_i$, le coefficient de pondération associé au risque de rang i.

Le niveau de risque global peut aussi être égal à une somme quadratique pondérée des risques avérés ou potentiels. Le niveau de risque global peut également être déterminé par une formule spécifique ou encore par un algorithme par exemple faisant intervenir ces coefficients de pondération.

Les coefficients de pondération associés à chaque risque peuvent être stockés dans une mémoire reliée au module central 20 ou bien intégrée au module central 20.

Enfin, une étape de commande 150 de ladite au moins une interface 30 d'action et d'information en fonction du niveau de risque global est réalisée par l'intermédiaire du module central 20 pilotant ladite au moins une interface 30 d'action et d'information.

Par exemple, ladite au moins une interface 30 d'action et d'information peut comporter un dispositif de visualisation 31.

L'étape de commande 150 peut notamment comporter une sous-étape d'affichage 151 afin d'afficher sur le dispositif de visualisation 31 le niveau de risque global et/ou une ou plusieurs informations relatives au système 10 et/ou à son environnement.

La sous-étape d'affichage 151 peut aussi afficher des tâches ou des actions à réaliser par l'opérateur afin de prendre en compte le niveau de risque global et/ou d'abaisser ce niveau de risque global. De la sorte, l'étape de commande 150 permet d'informer un opérateur du système 10 du niveau de risque global et de lui proposer éventuellement les actions appropriées et opportunes au vu des circonstances.

L'étape de commande 150 peut aussi comporter une sous-étape 152 d'alerte afin d'alerter un opérateur du système 10 par l'intermédiaire du dispositif d'alerte 32 en fonction du niveau de risque global si le niveau de risque global le nécessite. L'alerte peut être visuelle, vibratoire ou sonore par exemple.

L'étape de commande 150 peut également comporter une sous-étape d'action 153 afin de réaliser automatiquement une ou plusieurs actions sur le système 10 en fonction du niveau de risque global par l'intermédiaire du dispositif de commande 33. En effet, lorsque le niveau de risque global est important, il peut être nécessaire, voire indispensable, d'agir de façon urgente sur le système 10 et de réaliser une ou plusieurs actions afin d'éviter l'apparition d'une panne voire une dégradation du système 10.

Dès lors, le plus rapide et le plus efficace est de réaliser automatiquement, par l'intermédiaire du dispositif de commande 33 cet ou ces actions sur le système 10 afin de préserver le système 10 par exemple. Une telle action peut être par exemple l'arrêt du système 10 ou bien l'arrêt d'au moins un des ses moteurs 11 ou d'un sous-système. Lorsque le système 10 est un aéronef, une telle action peut aussi être un changement de direction pour éviter une collision ou bien pour contourner une zone à risque par exemple.

L'étape de commande 150 peut encore comporter plusieurs sous-étapes, à savoir une sous-étape d'affichage 155, une sous-étape de validation 156 et une sous-étape d'action 157.

La sous-étape d'affichage 155 permet d'afficher sur le dispositif de visualisation 31 une ou plusieurs actions à réaliser en fonction du niveau de risque global et éventuellement le niveau de risque global et des informations complémentaires sur le système 10 et son fonctionnement. Une telle action à réaliser peut être par exemple l'arrêt du système 10 ou bien l'arrêt d'au moins un des ses moteurs 11 ou d'un sous-système. Une telle action est préconisée par le procédé selon l'invention en fonction du niveau de risque global et des circonstances, mais le choix de réaliser une ou plusieurs de ces actions est laissé à l'opérateur du système 10. L'opérateur peut alors décider de réaliser lui-même ces actions.

L'opérateur peut aussi décider de valider, au cours de la sous-étape de validation 156, une ou plusieurs de ces actions proposées par l'intermédiaire d'un dispositif de validation 35. Un dispositif de validation 35 peut être le dispositif de visualisation 31, qui est par exemple un écran tactile, ou bien un bouton, un clavier ou tout dispositif approprié agencé par exemple sur le tableau de bord 19.

Ensuite, chaque action validée est réalisée automatiquement lors de la sous-étape d'action 157 par l'intermédiaire du dispositif de commande 33.

Les interfaces 30 d'action et d'information permettent ainsi avantageusement de proposer différentes tâches en fonction du niveau de risque global et des circonstances de sorte à informer, à alerter ou à proposer des actions à un opérateur du système 10, voire à agir automatiquement sur le système 10 si nécessaire.

Par ailleurs, le procédé selon l'invention peut comporter une étape supplémentaire de calcul 140 d'un niveau intermédiaire de risque en fonction de certains risques avérés ou potentiels relatifs au système 10 ou à des paramètres extérieurs au système 10, comme indiqué sur le schéma synoptique représenté sur la figure 7. En effet, des modules sources 50 et/ou des modules auxiliaires 60 peuvent être reliés entre eux, indépendamment du module central 20 afin de combiner des risques avérés ou potentiels en amont du module central 20. Cette étape de calcul intermédiaire 140 concerne en particulier des risques avérés ou potentiels ayant des liens entre eux.

Par exemple, le risque avéré ou potentiel relatif à la réalisation d'un vol en conditions *VFR* dépend de la luminosité comme évoqué précédemment, mais aussi des conditions météorologiques. En effet, bien que le soleil soit au zénith, la présence de nuages ou de brouillard peut interdire la réalisation d'un vol en conditions *VFR.*

Dès lors, un niveau intermédiaire de risque relatif à la réalisation d'un vol en conditions *VFR* peut être calculé lors de l'étape supplémentaire de calcul 140 en fonction des risques avérés ou potentiels relatifs à la luminosité, la présence de nuages, de brouillard et/ou de pluie par exemple. Ce niveau intermédiaire de risque relatif à la réalisation d'un vol en conditions *VFR* peut ensuite être utilisé par le module central 20 et combiné avec les autres risques avérés ou potentiels afin de déterminer le niveau de risque global du système 10.

Les modules auxiliaires 50 relatifs à ces différents paramètres extérieurs au système 10 peuvent alors être liés entre eux, en amont du module central 20, afin de réaliser cette étape supplémentaire de calcul 140 d'un niveau intermédiaire de risque.

Ces risques avérés ou potentiels relatifs à la luminosité, la présence de nuages, de brouillard et de pluie peuvent également être utilisés par le module central 20 pour déterminer le niveau de risque global du système 10. Cependant, cette étape supplémentaire de calcul 140 peut permettre avantageusement de délester de certaines tâches du module central 20 et éventuellement de réduire le temps permettant de déterminer le niveau de risque global du système 10.

Par ailleurs, voici un exemple de détermination d'un niveau de risque global dans le cas où le système 10 est un aéronef.

Pendant le vol de l'aéronef, un contrôleur moteur 51 détecte que le potentiel d'un moteur 11 est très avancé et détermine un risque avéré important associé à ce moteur 11 pouvant être un risque d'une panne totale du moteur 11. De plus, les conditions météorologiques sur la trajectoire prévue de l'aéronef changent et se dégradent par rapport aux prévisions initiales. Le procédé selon l'invention est informé de ce changement météorologique par l'intermédiaire du récepteur que comporte le module auxiliaire 61 relatif au risque associé à la météorologie et qui reçoit de nouvelles prévisions météorologiques. Le risque avéré et potentiel associé à ces conditions météorologiques augmente donc en conséquence.

De plus, le plan de vol en cours est en condition *VFR.*

Le module central 20 reçoit et analyse les différents risques avérés et le niveau de risque global augmente. Le module central 20 transmet des consignes au dispositif de visualisation 31 afin d'afficher une information représentative de ce risque global au pilote qui poursuit sa mission en connaissance de ces évolutions météorologiques notamment.

Les nouvelles prévisions météorologiques reçues par le module auxiliaire 61 révèlent une nouvelle dégradation plus importante des conditions météorologiques sur la trajectoire de l'aéronef de sorte que sur certaines zones, les conditions météorologiques sont telles qu'un vol en condition *VFR* n'est pas possible, seul un vol en condition *IFR* étant envisageable. Les risques avérés et potentiels relatifs aux conditions météorologiques et aux conditions de vol augmentent en conséquence.

Le module central 20 analyse ces nouveaux risques avérés et potentiels et le niveau de risque global augmente de nouveau. Le module central 20 transmet alors de nouvelles consignes au dispositif de visualisation 31 pour afficher cette évolution au pilote et lui proposer une nouvelle route afin d'éviter la zone où le vol en condition *VFR* n'est pas possible et en évitant également les zones peuplées ou arborées du fait du risque de panne totale du moteur qui imposerait une manœuvre d'atterrissage d'urgence. Le pilote est informé et peut alors accepter le nouveau plan de vol et le valider par l'intermédiaire du dispositif de validation 35.

Le dispositif de commande 33 reçoit des consignes relatives au nouveau plan de vol et transmet ces nouvelles consignes aux servocommandes 18 de l'aéronef. Le pilote poursuit sa mission sans stress ni surcharge de travail. Les marges de sécurités sont maintenues et les risques d'accidents sont écartés.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de gestion de risques et d'alertes pour un système (10), ledit système (10) comportant :

   - plusieurs modules sources (50) identifiant des risques avérés ou potentiels de pannes ou de dysfonctionnement dudit système (10),
   - plusieurs modules auxiliaires (60) identifiant des risques avérés ou potentiels liés à des paramètres extérieurs audit système (10) et susceptibles d'impacter le fonctionnement dudit système (10),
   - un module central (20) relié auxdits modules sources (50) et auxdits modules auxiliaires (60), ledit module central (20) comportant au moins un calculateur (25) et recevant des informations relatives auxdits risques avérés ou potentiels de pannes ou de dysfonctionnement dudit système (10),
   - au moins une interface (30) d'action et d'information d'un opérateur dudit système (10), ladite au moins une interface d'action et d'information étant reliée audit module central (20),

   ledit procédé comportant l'étape suivante :

   - détermination (110) d'au moins un risque avéré ou potentiel de panne ou de dysfonctionnement dudit système (10) par l'intermédiaire d'au moins un module source (50),

   **caractérisé en ce que** ledit procédé comporte en outre les étapes suivantes :

   - détermination (120) d'au moins un risque avéré ou potentiel lié à des paramètres extérieurs audit système (10) et susceptibles d'impacter le fonctionnement dudit système (10), par l'intermédiaire d'au moins un module auxiliaire (60), ladite détermination (120) comportant les sous-étapes suivantes :

     ◦ mesure (122) d'au moins un paramètre extérieur audit système (10) à l'aide d'un ou de plusieurs capteurs,
     ◦ analyse (125) dudit au moins un paramètre extérieur à l'aide d'un calculateur, et
     ◦ calcul (128) d'au moins un risque avéré ou potentiel associé audit au moins un paramètre extérieur audit système (10),

   - détermination (130) d'un niveau de risque global en combinant lesdits risques avérés ou potentiels et de leurs effets sur ledit système (10) par l'intermédiaire dudit module central (20), et
   - commande (150) par l'intermédiaire dudit module central (20) de ladite au moins une interface (30) d'action et d'information en fonction dudit niveau de risque global.

2. Procédé selon la revendication 1, **caractérisé en ce que**, ladite au moins une interface (30) d'action et d'information comportant un dispositif de visualisation (31), ladite étape de commande (150) de ladite au moins une interface (30) d'action et d'information comporte une sous-étape d'affichage (151) affichant sur le dispositif de visualisation (31) ledit niveau de risque global et/ou une ou plusieurs informations relatives audit système (10) et/ou à son environnement.

3. Procédé selon la revendication 1, **caractérisé en ce que**, ladite au moins une interface (30) d'action et d'information comportant un dispositif d'alerte (32), ladite étape de commande (150) de ladite au moins une interface (30) d'action et d'information comporte une sous-étape d'alerte (152) alertant un opérateur du système en fonction du niveau de risque global par l'intermédiaire dudit dispositif d'alerte (32).

4. Procédé selon la revendication 1, **caractérisé en ce que**, ladite au moins une interface (30) d'action et d'information comportant un dispositif de commande (33) dudit système (10), ladite étape de commande (150) de ladite au moins une interface (30) d'action et d'information comporte une sous-étape d'action (153) par l'intermédiaire dudit dispositif de commande (33), au moins une action sur ledit système (10) étant réalisée automatiquement par l'intermédiaire dudit dispositif de commande (33) en fonction dudit niveau de risque global.

**5.** Procédé selon la revendication 1, **caractérisé en ce que**, ladite au moins une interface (30) d'action et d'information comportant un dispositif de visualisation (31), un dispositif de validation (35) et un dispositif de commande (33) dudit système (10), ladite étape de commande de ladite au moins une interface (30) d'action et d'information comporte une sous-étape d'affichage (155) affichant sur le dispositif de visualisation (31) une ou plusieurs action à réaliser, une sous-étape de validation (156) par un opérateur dudit système (10) par l'intermédiaire dudit dispositif de validation (35) et une sous-étape d'action (157) par l'intermédiaire dudit dispositif de commande (33), ledit opérateur validant au moins une action proposée au cours de ladite sous-étape de validation (156) par l'intermédiaire dudit dispositif de validation (35) et chaque action validée étant réalisée automatiquement par l'intermédiaire dudit dispositif de commande (33) en fonction dudit niveau de risque global.

**6.** Procédé selon l'une quelconque des revendications 1 à 5, **caractérisé en ce que** ladite étape de détermination d'un niveau de risque global est réalisée en utilisant une pondération associée à chaque risque avéré ou potentiel relatif audit système (10) ou à son environnement.

**7.** Procédé selon l'une quelconque des revendications 1 à 6, **caractérisé en ce que** ladite étape de détermination (110) d'au moins un risque avéré ou potentiel de panne ou de dysfonctionnement dudit système (10) comporte les sous-étapes suivantes :

- mesure (112) d'au moins une caractéristique d'un élément dudit système (10), d'au moins une caractéristique d'un dispositif dudit système (10), d'au moins une caractéristique d'un sous-système dudit système (10) ou d'au moins un paramètre dudit système (10),
- analyse (115) de ladite au moins une caractéristique, et
- calcul (118) d'au moins un risque avéré ou potentiel de panne ou de dysfonctionnement dudit système (10) associé à ladite au moins une caractéristique.

**8.** Procédé selon l'une quelconque des revendications 1 à 7, **caractérisé en ce que** ladite détermination (130) d'un niveau de risque global est réalisée par l'intermédiaire d'un système expert, d'une intelligence artificielle ou bien d'un système neuronal.

**9.** Procédé selon l'une quelconque des revendications 1 à 8,

**caractérisé en ce que** ledit système (10) est un aéronef et lesdites informations relatives auxdits risques avérés ou potentiels liés auxdits paramètres extérieurs du système (10) concernent des conditions météorologiques, des conditions de vol (IFR, VFR), un terrain et son relief, un objet d'une mission réalisée par ledit aéronef et une trajectoire dudit aéronef, un état d'un pilote dudit aéronef.

**10.** Procédé selon l'une quelconque des revendications 1 à 9, **caractérisé en ce que** ledit système (10) est un aéronef et lesdites informations relatives auxdits risques avérés ou potentiels de pannes ou de dysfonctionnement dudit système (10) sont relatives à un contrôle santé moteur, une surveillance dudit aéronef, et/ou à des performances dudit aéronef.

**11.** Procédé selon l'une quelconque des revendications 1 à 10, **caractérisé en ce que** le procédé comporte une étape supplémentaire de calcul (140) d'un niveau intermédiaire de risque en fonction de certains risques avérés ou potentiels relatifs audit système (10) ou à des paramètres extérieurs audit système (10), ledit niveau intermédiaire de risque relatif étant utilisé par ledit module central (20) et combiné avec les autres risques avérés ou potentiels pour déterminer ledit niveau de risque global du système (10).

**12.** Dispositif (1) de gestion de risques et d'alertes pour un système (10), ledit dispositif (1) de gestion de risques et d'alertes comportant :

- plusieurs modules sources (50) identifiant des risques avérés ou potentiels de pannes ou de dysfonctionnement dudit système (10),
- plusieurs modules auxiliaires (60) identifiant des risques avérés ou potentiels liés à des paramètres extérieurs audit système (10) et susceptibles d'impacter le fonctionnement dudit système (10),
- un module central (20) relié auxdits modules sources (50) et auxdits modules auxiliaires (60), ledit module central (20) comportant au moins un calculateur (25) et recevant des informations relatives auxdits risques avérés ou potentiels de pannes ou de dysfonctionnement dudit système (10),
- au moins une interface (30) d'action et d'information dudit système (10) reliée audit module central (20),

**caractérisé en ce que** ledit dispositif (1) est configuré pour la mise en œuvre du procédé selon l'une quelconque des revendications 1 à 11.

**13.** Véhicule (2),

**caractérisé en ce que** ledit véhicule (2) comporte un dispositif (1) de gestion de risques et d'alertes selon la revendication 12.

**Patentansprüche**

1. Verfahren zum Risiko- und Alarmmanagement für ein System (10), wobei das System (10) umfasst:

   - mehrere Quellmodule (50), die tatsächliche oder potenzielle Risiken von Ausfällen oder Funktionsstörungen des Systems (10) identifizieren,
   - mehrere Hilfsmodule (60), die tatsächliche oder potenzielle Risiken identifizieren, die mit Parametern außerhalb des Systems (10) zusammenhängen und den Betrieb des Systems (10) beeinträchtigen können,
   - ein Zentralmodul (20), das mit den Quellmodulen (50) und den Hilfsmodulen (60) verbunden ist, wobei das Zentralmodul (20) mindestens einen Rechner (25) umfasst und Informationen über die tatsächlichen oder potenziellen Risiken von Ausfällen oder Funktionsstörungen des Systems (10) empfängt,
   - mindestens eine Aktions- und Informationsschnittstelle (30) für einen Bediener des Systems (10), wobei die mindestens eine Aktions- und Informationsschnittstelle mit dem Zentralmodul (20) verbunden ist,

   wobei das Verfahren den folgenden Schritt umfasst:

   - Bestimmen (110) mindestens eines tatsächlichen oder potenziellen Risikos eines Ausfalls oder einer Funktionsstörung des Systems (10) mittels mindestens eines Quellmoduls (50),

   **dadurch gekennzeichnet, dass** das Verfahren außerdem die folgenden Schritte umfasst:

   - Bestimmen (120) mindestens eines tatsächlichen oder potenziellen Risikos im Zusammenhang mit Parametern außerhalb des Systems (10), die den Betrieb des Systems (10) beeinträchtigen können, über mindestens ein Hilfsmodul (60), wobei das Bestimmen (120) die folgenden Teilschritte umfasst:

     Messen (122) mindestens eines externen Parameters des Systems (10) mit Hilfe eines oder mehrerer Sensoren,
     Analysieren (125) des mindestens einen externen Parameters mit Hilfe eines Rechners und
     Berechnen (128) mindestens eines tatsächlichen oder potenziellen Risikos, das mit dem mindestens einen externen Parameter des Systems (10) verknüpft ist,

   - Bestimmen (130) eines Gesamtrisikoniveaus durch Kombinieren der tatsächlichen oder potenziellen Risiken und ihrer Auswirkungen auf das System (10) über das Zentralmodul (20) und
   - Steuern (150) der mindestens einen Aktions- und Informationsschnittstelle (30) über das Zentralmodul (20) in Abhängigkeit von dem Gesamtrisikoniveau.

2. Verfahren nach Anspruch 1, **dadurch gekennzeichnet, dass** die mindestens eine Aktions- und Informationsschnittstelle (30) eine Anzeigeeinrichtung (31) umfasst, und der Schritt des Steuerns (150) der mindestens einen Aktions- und Informationsschnittstelle (30) einen Anzeigeschritt (151) umfasst, der auf der Anzeigeeinrichtung (31) das Gesamtrisikoniveau und/oder eine oder mehrere Informationen anzeigt, die das System (10) und/oder seine Umgebung betreffen.

3. Verfahren nach Anspruch 1, **dadurch gekennzeichnet, dass** die mindestens eine Aktions- und Informationsschnittstelle (30) eine Alarmvorrichtung (32) umfasst, und der Schritt (150) des Steuerns der mindestens einen Aktions- und Informationsschnittstelle (30) einen Alarm-Teilschritt (152) umfasst, der einen Bediener des Systems in Abhängigkeit vom Gesamtrisikoniveau mittels der Alarmvorrichtung (32) alarmiert.

4. Verfahren nach Anspruch 1, **dadurch gekennzeichnet, dass** die mindestens eine Aktions- und Informationsschnittstelle (30) eine Vorrichtung (33) zum Steuern des Systems (10) umfasst, der Schritt des Steuerns (150) der mindestens einen Aktions- und Informationsschnittstelle (30) einen Aktions-Unterschritt (153) über die Vorrichtung (33) zum Steuern umfasst, wobei mindestens eine Aktion an dem System (10) automatisch über die Vorrichtung (33) zum Steuern in Abhängigkeit von dem Gesamtrisikoniveau durchgeführt wird.

5. Verfahren nach Anspruch 1, **dadurch gekennzeichnet, dass** die mindestens eine Aktions- und Informationsschnittstelle (30) eine Anzeigeeinrichtung (31), eine Validierungseinrichtung (35) und eine Vorrichtung (33) zum Steuern des Systems (10) umfasst, der Schritt des Steuerns der mindestens einen Aktions- und Informationsschnittstelle (30) einen Teilschritt des Anzeigens (155), bei dem auf der Anzeigeeinrichtung (31) eine oder mehrere auszuführende Aktionen angezeigt werden, einen Teilschritt des Validierens (156) durch einen Bediener des Systems (10) über die Validierungsvorrichtung (35) und einen Teilschritt (157) der Aktion über die Steuervorrichtung (33) umfasst, wobei der Bediener während des Teilschritts des Validierens (156) über die Validierungsvorrichtung (35) mindestens eine vorgeschlagene Aktion validiert und jede validierte Aktion automatisch über die Steuervorrichtung (33) entsprechend dem Gesamtrisikoniveau ausgeführt wird.

6.  Verfahren nach einem der Ansprüche 1 bis 5, **dadurch gekennzeichnet, dass** der Schritt des Bestimmens eines Gesamtrisikoniveaus unter Verwendung einer Gewichtung durchgeführt wird, die jedem tatsächlichen oder potenziellen Risiko in Bezug auf das System (10) oder dessen Umgebung zugeordnet ist.

7.  Verfahren nach einem der Ansprüche 1 bis 6, **dadurch gekennzeichnet, dass** der Schritt des Bestimmens (110) mindestens eines tatsächlichen oder potenziellen Risikos eines Ausfalls oder einer Funktionsstörung des Systems (10) die folgenden Teilschritte umfasst:

    - Messen (112) mindestens einer Eigenschaft eines Elements des Systems (10), mindestens einer Eigenschaft einer Vorrichtung des Systems (10), mindestens einer Eigenschaft eines Teilsystems des Systems (10) oder mindestens eines Parameters des Systems (10),
    - Analysieren (115) des mindestens einen Merkmals und
    - Berechnen (118) mindestens eines mit dem mindestens einen Merkmal verknüpften tatsächlichen oder potenziellen Risikos eines Ausfalls oder einer Funktionsstörung des Systems (10).

8.  Verfahren nach einem der Ansprüche 1 bis 7, **dadurch gekennzeichnet, dass** das Bestimmen (130) eines Gesamtrisikoniveaus mittels eines Expertensystems, einer künstlichen Intelligenz oder eines neuronalen Systems erfolgt.

9.  Verfahren nach einem der Ansprüche 1 bis 8, **dadurch gekennzeichnet, dass** das System (10) ein Luftfahrzeug ist und die Informationen über die tatsächlichen oder potenziellen Risiken im Zusammenhang mit den externen Parametern des Systems (10) Wetterbedingungen, Flugbedingungen (IFR, VFR), ein Gelände und dessen Relief, ein Ziel einer von dem Luftfahrzeug durchgeführten Mission und eine Flugbahn des Luftfahrzeugs sowie den Zustand eines Piloten des Luftfahrzeugs betreffen.

10. Verfahren nach einem der Ansprüche 1 bis 9, **dadurch gekennzeichnet, dass** das System (10) ein Luftfahrzeug ist und die Informationen über die tatsächlichen oder potenziellen Risiken von Ausfällen oder Funktionsstörungen des Systems (10) eine Triebwerkszustandsüberwachung, eine Überwachung des Luftfahrzeugs und/oder die Leistung des Luftfahrzeugs betreffen.

11. Verfahren nach einem der Ansprüche 1 bis 10, **dadurch gekennzeichnet, dass** das Verfahren einen zusätzlichen Schritt des Berechnens (140) eines mittleren Risikoniveaus in Abhängigkeit von bestimmten tatsächlichen oder potenziellen Risiken in Bezug auf das System (10) oder auf Parameter außerhalb des Systems (10) umfasst, wobei das mittlere relative Risikoniveau von dem Zentralmodul (20) verwendet und mit den anderen tatsächlichen oder potenziellen Risiken kombiniert wird, um das Gesamtrisikoniveau des Systems (10) zu bestimmen.

12. Vorrichtung (1) zum Risiko- und Alarmmanagement für ein System (10), wobei die Vorrichtung (1) zum Risiko- und Alarmmanagement umfasst:

    - mehrere Quellmodule (50), die tatsächliche oder potenzielle Risiken von Ausfällen oder Funktionsstörungen des Systems (10) identifizieren,
    - mehrere Hilfsmodule (60), die tatsächliche oder potenzielle Risiken identifizieren, die mit externen Parametern des Systems (10) zusammenhängen und den Betrieb des Systems (10) beeinträchtigen können,
    - ein Zentralmodul (20), das mit den Quellenmodulen (50) und den Hilfsmodulen (60) verbunden ist, wobei das Zentralmodul (20) mindestens einen Rechner (25) umfasst und Informationen über die tatsächlichen oder potenziellen Risiken von Ausfällen oder Funktionsstörungen des Systems (10) empfängt,
    - mindestens eine Aktions- und Informationsschnittstelle (30) des Systems (10), die mit dem Zentralmodul (20) verbunden ist,

    **dadurch gekennzeichnet, dass** die Vorrichtung (1) konfiguriert ist, um das Verfahren nach einem der Ansprüche 1 bis 11 durchzuführen.

13. Verkehrsmittel (2), **dadurch gekennzeichnet, dass** das Verkehrsmittel (2) eine Vorrichtung (1) zum Risiko- und Alarmmanagement nach Anspruch 12 umfasst.

### Claims

1.  Method for managing risks and alerts for a system (10), said system (10) comprising:

    - several source modules (50) identifying proven or potential risks of breakdowns or of malfunctioning of said system (10),
- several auxiliary modules (60) identifying proven or potential risks linked to parameters external to said system (10) and able to impact the operation of said system (10),
- a central module (20) connected to said source modules (50) and to said auxiliary modules (60), said central module (20) comprising at least one calculator (25) and receiving information relating to said proven or potential risks of breakdowns or of malfunctioning of said system (10),
- at least one action and information interface (30) of an operator of said system (10), said at least one action and information interface being connected to said central module (20),

said method comprising the following step:

- determining (110) at least one proven or potential risk of breakdown or of malfunctioning of said system (10) through at least one source module (50), **characterised in that** said method further comprises the following steps:
- determining (120) at least one proven or potential risk linked to parameters external to said system (10) and able to impact the operation of said system (10), through at least one auxiliary module (60), said determination (120) comprising the following substeps:

  ∘ measuring (122) at least one parameter external to said system (10) using one or more sensors,
  ∘ analysing (125) said at least one external parameter using a calculator, and
  ∘ calculating (128) at least one proven or potential risk associated with said at least one parameter external to said system (10),

- determining (130) an overall risk level by combining said proven or potential risks and their effects on said system (10) through said central module (20), and
- controlling (150) through said central module (20) said at least one action and information interface (30) as a function of said overall risk level.

2. Method according to claim 1,
**characterised in that**, said at least one action and information interface (30) comprising a display device (31), said step (150) of controlling said at least one action and information interface (30) comprises a display substep (151) displaying on the display device (31), said overall risk level and/or one or more pieces of information relating to said system (10) and/or to its environment.

3. Method according to claim 1,
**characterised in that**, said at least one action and information interface (30) comprising an alert device (32), said step (150) of controlling said at least one action and information interface (30) comprises an alert substep (152) alerting an operator of the system as a function of the overall risk level through said alert device (32).

4. Method according to claim 1,
**characterised in that**, said at least one action and information interface (30) comprising a control device (33) for controlling said system (10), said step (150) of controlling said at least one action and information interface (30) comprises an action substep (153) through said control device (33), at least one action on said system (10) being carried out automatically through said control device (33) as a function of said overall risk level.

5. Method according to claim 1,
**characterised in that**, said at least one action and information interface (30) comprising a display device (31), a validation device (35) and a control device (33) for controlling said system (10), said step of controlling said at least one action and information interface (30) comprises a display substep (155) displaying on the display device (31), one or more actions to be carried out, a validation substep (156) of validating by an operator of said system (10) through said validation device (35) and an action substep (157) through said control device (33), said operator validating at least one action proposed during said validation substep (156) through said validation device (35) and each validated action being carried out automatically through said control device (33) as a function of said overall risk level.

6. Method according to any one of claims 1 to 5,
**characterised in that** said step of determining an overall risk level is carried out by using a weighting associated with each proven or potential risk relating to said system (10) or to its environment.

7. Method according to any one of claims 1 to 6,
**characterised in that** said step (110) of determining at least one proven or potential risk of breakdown or of malfunctioning of said system (10) comprises the following substeps:

    - measuring (112) at least one characteristic of an element of said system (10), at least one characteristic of a device of said system (10), at least one characteristic of a subsystem of said system (10) or at least one parameter of said system (10),
    - analysing (115) said at least one characteristic, and

- calculating (118) at least one proven or potential risk of breakdown or of malfunctioning of said system (10) associated with said at least one characteristic.

8. Method according to any one of claims 1 to 7, **characterised in that** said determination (130) of an overall risk level is carried out through an expert system, an artificial intelligence or a neuronal system.

9. Method according to any one of claims 1 to 8, **characterised in that** said system (10) is an aircraft and said information relating to said proven or potential risks linked to said external parameters of the system (10) relate to meteorological conditions, flight conditions (IFR, VFR), a terrain and its relief, an aim of the mission carried out by said aircraft and a path of said aircraft, a status of a pilot of said aircraft.

10. Method according to any one of claims 1 to 9, **characterised in that** said system (10) is an aircraft and said information relating to said proven or potential risks of breakdowns or of malfunctioning of said system (10) relate to an engine health control, a monitoring of said aircraft, and/or to performance of said aircraft.

11. Method according to any one of claims 1 to 10, **characterised in that** the method comprises an additional step (140) of calculating an intermediate risk level as a function of certain proven or potential risks relating to said system (10) or to parameters external to said system (10), said intermediate risk level being used by said central module (20) and combined with the other proven or potential risks to determine said overall risk level of the system (10).

12. Device (1) for managing risks and alerts for a system (10), said device (1) for managing risks and alerts comprising:

    - several source modules (50) identifying proven or potential risks of breakdowns or of malfunctioning of said system (10),
    - several auxiliary modules (60) identifying proven or potential risks linked to parameters external to said system (10) and able to impact the operation of said system (10),
    - a central module (20) connected to said source modules (50) and to said auxiliary modules (60), said central module (20) comprising at least one calculator (25) and receiving information relating to said proven or potential risks of breakdowns or of malfunctioning of said system (10),
    - at least one action and information interface (30) of said system (10) connected to said central module (20),

**characterised in that** said device (1) is configured to implement the method according to any one of claims 1 to 11.

13. Vehicle (2),
    **characterised in that** said vehicle (2) comprises a device (1) for managing risks and alerts according to claim 12.

Fig.1

Fig.2

Fig.3

Fig.4

Fig.5

Fig.6

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2873038 A
- EP 0964381 A
- US 20100161157 A
- EP 2647959 A
- FR 2954842
- FR 3037155

**Littérature non-brevet citée dans la description**

- **C. GOERZEN** ; **M. WHALLEY**. *Minimal Risk Motion Planning : a New Planner for Autonomous UAVs in Uncertain Environments*, 27 January 2011
- **H. VON VIEBAHN**. *A Method for Detecting and Avoiding Flight Hazards*, January 1997